Europäisches Patentamt

European Patent Office

Office européen des brevets

(19)

(11) Numéro de publication: **0 006 672**
**B1**

(12) ## FASCICULE DE BREVET EUROPEEN

(45) Date de publication du fascicule de brevet:
**18.11.81**

(51) Int. Cl.³: **B 60 C 25/06**

(21) Numéro de dépôt: **79200345.1**

(22) Date de dépôt: **26.06.79**

(54) **Dispositif pour le montage et le démontage d'un pneu sur une jante de roue.**

(30) Priorité: **27.06.78 BE 2057099**

(43) Date de publication de la demande:
**09.01.80 Bulletin 80/1**

(45) Mention de la délivrance du brevet:
**18.11.81 Bulletin 81/46**

(84) Etats contractants désignés:
**DE FR IT NL**

(56) Documents cités:
**US-A-3 780 785**

(73) Titulaire: **Du Quesne, Francis, Cleistraat 138,
B-2630 Aartselaar (BE)**

(72) Inventeur: **Du Quesne, Francis, Cleistraat 138,
B-2630 Aartselaar (BE)**

(74) Mandataire: **Ottelohe, Jozef René, Bureau Ottelohe J.R.
Postbus 3 Fruithoflaan 105, B-2600 Antwerpen (Berchem)
(BE)**

ACTORUM AG.

«Dispositif pour le montage et le démontage d'un pneu sur une jante de roue.»

La présente invention se rapporte à un dispositif pour le montage et le démontage d'un pneu sur une jante de roue d'un véhicule, ledit dispositif comportant un plateau rotatif horizontal avec griffes qui se déplacent en vue du serrage de la roue, une colonne fixe sur laquelle est fixé un bras pouvant osciller dans un plan horizontal au-dessus dudit plateau, et dans ce bras une barre qui est réglable en hauteur et qui porte en son extrémité inférieure l'outil pour presser le pneu sur la jante de roue et l'en extraire.

Un tel dispositif est connu du brevet US-A-3.858.637 au nom du demandeur. Dans ce dispositif le bras est suspendu horizontalement par un long pivot vertical qui est réuni à la colonne fixe.

Ce dispositif présente l'inconvénient qu'après un certain temps le bras prend trop de jeu sur le pivot, ce qui a pour effet l'impossibilité d'un réglage précis en hauteur de l'outil de montage-démontage, par rapport à la roue.

Ce problème ne se pose évidemment pas dans des dispositifs selon le brevet US-A-3.780.785, le bras n'étant pas pivotant mais axialement déplaçable par rapport à la colonne.

En vue de remédier au problème susdit, on a réalisé conformément à la principale caractéristique de l'invention un dispositif dont au moins la partie du bras voisine de l'axe de pivotement est disposée latéralement à cet axe de pivotement et qu'il est prévu entre cet axe et la partie du bras appliquée autour de cet axe, un dispositif pour le réglage du jeu permettant le pivotement aisée du bras.

Conformément à une autre caractéristique importante de l'invention le bras s'écarte e l'horizontale et est monté de préférence obliquement vers le bas en direction de l'outil porté par ce bras.

Ce dispositif efficace et bon marché, permet de manière simple et rapide de régler avec précision le jeu permettant le pivotement aisé du bras oscillant et le cas échéant de reprendre le jeu qui s'est créé entre le bras et le pivot. En outre il devient facile de monter un pneu sur une roue sans que cette opération ne soit gênée par le bras et on peut construire plus bas et plus robuste l'axe de pivotement et le dispositif pour le montage et le démontage de pneus. De même, par le fait du montage incliné du bras, la barre à outil portée par ce bras peut être exécutée plus courte et moins épaisse que les barres des dispositifs connus.

A titre d'exemple et sans le moindre caractère de limitation, il suit une description plus détaillée d'une forme d'exécution choisie du dispositif pour le montage et le démontage d'un pneu sur une jante de roue conforme à l'invention. Cette description se réfère aux dessins annexés dans lesquels:

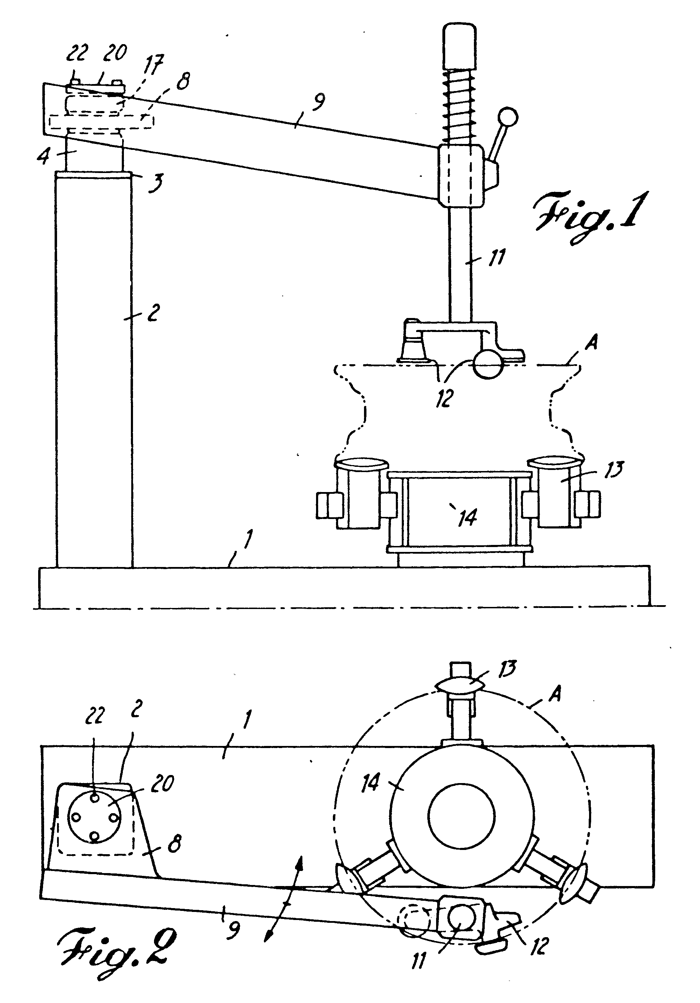

la figure 1 représente une vue latérale de la partie supérieure d'un dispositif pour le montage et le démontage d'un pneu sur une jante de roue selon l'invention;
la figure 2 en représente une vue en plan;

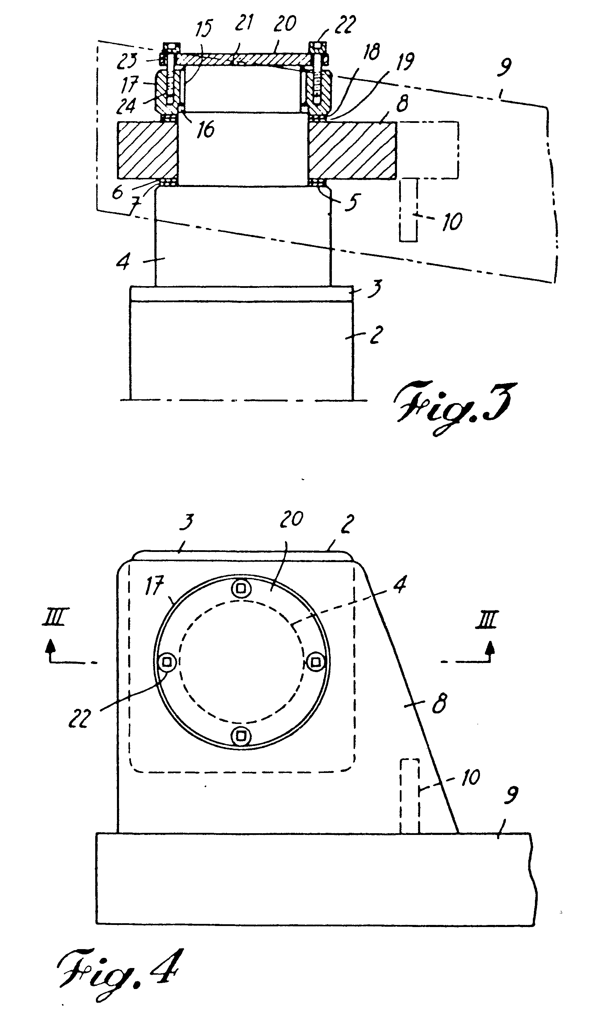

la figure 3 représente une vue latérale agrandie avec coupe partielle suivant la ligne III–III de la figure 4 de la partie pivotante du bras qui porte l'outil;
la figure 4 représente une vue en plan de cette partie pivotante.

Sur la bâti 1 se trouve montée une colonne fixe 2 dont la partie supérieure est recouverte d'une plaque 3. Sur cette plaque se trouve monté un axe de pivotement 4 avec épaulement 5 sur lequel, par l'entremise de deux rondelles 6 et 7, repose une aile 8 qui peut pivoter autour de l'axe 4 et sur laquelle se trouve fixé latéralement un bras 9. A titre de support il est prévu entre l'aile 8 et le bras 9 une nervure de renforcement 10. Ledit bras 9 porte de manière bien connue en son extrémité avant une barre 11 réglable en hauteur au bas de laquelle est fixé l'outil 12 servant au montage et au démontage d'un pneu. A partir de l'axe de pivotement 4 le bras 9 est monté avec une inclinaison vers le bas. Par pivotement du bras 9 et par déplacement en hauteur de la barre 11, l'outil 12 peut être amené en position appropriée par rapport à la roue A, laquelle se trouve saisie entre les griffes 13 d'un plateau rotatif 14. Au-dessus, l'axe de pivotement 4 est pourvu d'une partie filetée 15 et d'une gorge annulaire 16. Sur la partie filetée de l'axe de pivotement 4 se visse un écrou cylindrique qui exerce par l'entremise de deux rondelles 18–19, la pression désirée sur l'aile 8 du bras 9 pour en régler ainsi le jeu de pivotement. Dans le but de maintenir l'écrou 17 dans la condition désirée de pression sur l'axe 4, il est prévu un disque de recouvrement 20 qui s'appuie d'une part sur la face de tête 21 de l'axe 4 qui dépasse l'écrou, et se trouve sollicité d'autre part en direction de l'écrou au moyen de vis 22, qui passent librement par des trous 23 prévus dans le disque 20, pour se visser dans des trous taraudés 24 de l'écrou 17, exerçant ainsi une traction sur l'écrou de manière que celui-ci se trouve calé sur l'axe. Pour le réglage du jeu de pivotement du bras 9, il suffit de desserrer les vis 22, pour que le disque 20 ne presse plus la face de tête 21 de l'axe 4, puis de serrer l'écrou 17 jusqu'à ce qu'une pression suffisante soit exercée sur l'aile 8 du bras 9 et finalement de serrer à nouveau les vis 22 jusqu'à ce que l'écrou 17 soit derechef calé sur la partie filetée 15 de l'axe 4 comme décrit précédemment.

**Revendications**

1. Dispositif pour le montage et le démontage d'un pneu sur une jante de roue d'un véhicule, ledit dispositif comportant un plateau rotatif horizontal (14) avec griffes (13) qui se déplacent en

2

vue du serrage de la roue A, une colonne fixe (2) sur laquelle est fixé en bras (9) pouvant osciller dans un plan horizontal au-dessus dudit plateau (14), et dans ce bras (9) une barre (11) qui est réglable en hauteur et qui porte en son extrémité inférieure l'outil (12) pour presser le pneu sur la jante de roue et l'en extraire, caractérisé par le fait qu'au moins la partie du bras (9) voisine de l'axe de pivotement (4) est disposée latéralement à cet axe de pivotement (4) et qu'il est prévu entre cet axe (4) et la partie (8) du bras, appliquée autour de cet axe, un dispositif (15 à 24) pour le réglage du jeu permettant le pivotement aisé du bras (9).

2. Dispositif selon la revendication 1, caractérisé par le fait que le bras (9) se trouve fixé latéralement à une aile (8) montée à rotation autour de l'axe (4) monté sur la colonne fixe (2).

3. Dispositif selon la revendication 1, caractérisé par le fait que le bras (9) s'écarte de l'horizontale et est monté de préférence obliquement vers le bas en direction de l'outil (12) porté par ce bras (9).

4. Dispositif selon la revendication 1, caractérisé par le fait que l'axe de pivotement (4) est pourvu d'un épaulement (5), que le bras (9) est appliqué de manière à pivoter autour de l'axe (4) et à reposer sur l'épaulement (5) de cet axe, que ledit axe est pourvu à sa partie supérieure d'une section filetée (15) sur laquelle se visse un écrou (17) qui exerce une pression sur le bras (9) et au moyen duquel on peut régler le jeu de pivotement de ce bras, que la tête (21) de l'axe (4) dépasse l'écrou (17) et qu'il est prévu sur cette tête un disque de recouvrement (20) qui est fixé à l'écrou (17) au moyen de vis (22) pour tirer le disque et l'écrou l'un vers l'autre afin de bloquer l'écrou (17) sur l'axe (4).

5. Dispositif selon la revendication 4, caractérisé par le fait que d'une part entre l'épaulement (5) de l'axe (4) et le bras (9), et d'autre part entre l'écrou (17) et le bras (9), il est prévu des rondelles (6-7-18-19) qui facilitent le pivotement du bras.

**Patentansprüche**

1. Vorrichtung für das Aufziehen eines Reifens auf der Felge eines Fahrzeugrads und für das Abziehen desselben von der Felge, bestehend aus einer waagerechten Drehscheibe (14) mit beweglichen Klauen (13) für das Festklemmen des Rads (8), einer ortsfesten Säule (2), auf der ein in einer waagerechten Ebene über der vorgenannten Drehscheibe (14) schwenkender Schwenkarm (9) montiert ist, und einer in diesem Schwenkarm (9) geführten höhenverstellbaren Stange (11), an deren unteren Ende das Werkzeug (12) für das Aufziehen des Reifens auf der Radfelge und das Abziehen desselben von der Felge befestigt ist, dadurch gekennzeichnet, dass wenigstens der sich in der Nähe der Schwenkachse (4) befindliche Teil des Schwenkarmes (9) seitlich in bezug auf diese Achse (4) angeordnet ist, und zwischen der Schwenkachse (4) und dem sie umgebenden Teil (8) des Schwenkarmes eine Vorrichtung (15–24) für das Regeln des für das ungehinderte Schwenken des Armes (9) erforderlichen Spieles vorgesehen ist.

2. Vorrichtung gemäss dem Anspruch 1, dadurch gekennzeichnet, dass der vorgenannte Schwenkarm (9) seitlich an einem Flügel (8) befestigt ist, der drehbar um die auf der ortsfesten Säule (2) montierte Achse (4) angeordnet ist.

3. Vorrichtung gemäss dem Anspruch 1, dadurch gekennzeichnet, dass der vorgenannte Schwenkarm (9) einen Winkel mit der waagerechten Ebene bildet und vorzugsweise schräg nach unten nach dem durch ihn getragenen Werkzeug (12) gerichtet ist.

4. Vorrichtung gemäss dem Anspruch 1, dadurch gekennzeichnet, dass die vorgenannte Schwenkachse (4) einen Schulter (5) aufweist, dass der vorgenannte schwenkbar um die Achse (4) angeordnete Schwenkarm (9) sich auf diesem Schulter (5) abstützt, dass der obere Teil der Achse (4) mit Aussengewinde (15) versehen ist, worauf eine Druck auf dem Arm (9) ausübende Mutter (17) für das Regeln des Schwenkspieles desselben geschraubt ist, dass der Kopf (21) dieser Achse (4) diese Mutter (17) überragt und dass auf diesem Kopf (21) eine Deckscheibe (20) angeordnet ist, welche mit Schrauben (22) an der Mutter (17) befestigt ist, um diese auf der Achse (4) zu blockieren durch gegenseitiges Anziehen der Scheibe und der Mutter.

5. Vorrichtung gemäss dem Anspruch 4, dadurch gekennzeichnet, dass einerseits zwischen dem vorgenannten Schulter (5) der Achse (4) und dem Arm (9) und anderseits zwischen der vorgenannten Mutter (17) und dem Arm (9) Unterlegscheiben (6, 7, 18, 19) zwecks Erleichterung der Schwenkbewegung des Armes vorgesehen sind.

**Claims**

1. Device for fitting and removing a tire on and from a vehicle wheel rim, aforesaid device comprising a horizontally rotating table (14) with jaws (13) which can be moved so as to clamp the wheel (A), a fixed column (2) upon which is fitted an arm (9) which can swivel in a horizontal plane above aforesaid table (14), and in this arm (9) a bar (11) which is adjustable in height and which carries at its lower end the tool (12) for pressing the tire on the wheel rim and for removing it from same, characterized by the fact that at least that part of the arm which is close to the pivoting shaft (4) is located laterally with respect to that pivoting shaft (4) and that there is provided between that shaft (4) and part (8) of the arm, fitted around aforesaid shaft, a device (15 to 24) for adjusting the clearance so as to permit the easy swivelling of the arm (9).

2. Device according to claim 1, characterized by the fact that said arm (9) is laterally attached to a flange (8) fitted so as to be able to rotate around the shaft (4) which is secured to fixed column (2).

3. Device according to claim 1, characterized by the fact that the arm (9) deviates from the horizontal and is preferably fitted slanting down in the direction of the tool (12) borne by the said arm (9).

4. Device according to claim 1, characterized by the fact that the pivoting shaft (4) is provided with a shoulder (5), that the arm (9) is fitted so as to pivot around shaft (4) and to rest on shoulder (5) of this shaft, that aforesaid shaft is provided at its upper end with a threaded portion (15) upon which screws a nut (17) which exerts a pressure on the arm (9) and by means of which it is possible to adjust the pivoting clearance of said arm, that the head (21) of the shaft (4) protrudes above the nut (17) and that there is provided upon aforesaid head a covering disc (20) which is attached to the nut (17) by means of screws (22), so as to pull the disc and the nut towards each other in order to jam the nut (17) upon the shaft (4).

5. Device according to claim 4, characterized by the fact that on the one hand, between the shoulder (5) of the shaft (4) and the arm (9), and on the other hand, between the nut (17) and the arm (9), there are provided washers (6-7-18-19) which facilitate the pivoting of the arm.

Fig.1

Fig.2

0 006 672

Fig. 3

Fig. 4

7